# EUROPEAN PATENT APPLICATION

(11) **EP 3 076 741 A1**
(43) Date of publication of application: **05.10.2016**
(21) Application number: 15161973.1
(22) Date of filing: 31.03.2015
(51) Int. Cl.: H04W 76/00, H04L 29/12, H04W 76/04, H04W 88/16

(54) **METHOD FOR MANAGING ROUTING IN A CONTENT DISTRIBUTION NETWORK IN A MOBILE NETWORK**

(71) Applicant: ALCATEL LUCENT, 92100 Boulogne-Billancourt (FR)
(72) Inventor: El Mghazli, Yacine, 91620 Nozay (FR); Mongazon-Cazavet, Bruno, 91620 Nozay (FR)
(74) Representative: Cabinet Camus Lebkiri

(57) **Abstract**

Method for managing routing in a Content Distribution Network in a Mobile Network, the Content Distribution Network comprising at least two Delivery Appliances accessible through a Shadow Packet Data Gateway, the method comprising the following steps:
- setup (310 - 320) of a regular dedicated bearer, and of a mirror dedicated bearer, by using a least a Create Bearer Request, one of the parameters of the Create Bearer Request being an information related to a Delivery Appliance among one of the at least two deliveries appliance,
- setup (330) of a Network Address Translation function, at the Shadow Packet Data Gateway level for the mirror dedicated bearer, to translate a regular Content Distribution Network address into a Delivery Appliance address, the Delivery Appliance address being computed during the setup of the dedicated bearers by using the information related to a Delivery Appliance

## Description

### FIELD OF THE INVENTION

The present invention relates to the technical field of Content Delivery Network (CDN), and particularly to a method and a system to handle transparent routing to Delivery Appliance (DA) replicating part or totality of a CDN in a mobile network.

### BACKGROUND OF THE INVENTION

By "user equipment" or UE, it is meant, here, any device comprising means permitting to connect to a mobile network such as a cellular network.

A Content Delivery Network, also referred to as Content Distribution Network (CDN), is a system making available copies of data/content, through interconnected storage means.

Data/content stored in a CDN network, may be for instance web objects, downloadable objects (ex: media files, software, documents), applications or real-time media streams. The data traffic associated with this kind of content is further referred to hereinafter as "CDN traffic".

In CDN, copies of data/content are placed at various points of the network so as to maximize bandwidth/throughputs for access to the data/content from clients throughout the network.

Unlike clients of a network accessing a same central server, CDN permits to avoid bottlenecks near a central server. Indeed, in CDN a client accesses a copy of a data/content located nearby.

For CDN, the term "near" refers to a topological distance in IP network. A topological distance may be evaluated, based on criterions such as hop counts, network latency, response to a ping (i.e. round-trip delay time) or network load.

In fact, the CDN role is to take into account the notion of IP distance and to select an appropriate delivery node (also known as Delivery Appliance) where to route a user request. By "Delivery Appliance", it is meant here, a point/node in CDN, comprising means to store CDN data/content copies and means for delivering them.

CDN model is very efficient for fixed network, provided for instance by Internet Service Providers (ISP), because user IP addresses are allocated in a geographical manner. With means that are based on the IP address of a user, it is possible to identify a nearest DA (in term of network topological distance) from the user location.

However, for Mobile Network Operators (MNO), the problem in cellular networks is different since IP addresses are allocated from a pool of IP addresses, without any user location considerations. In fact, it is impossible to establish a link between user IP address and user location for identifying a nearest DA, i.e. to forward user CDN content request to the closest delivery node.

Mobile networks, such as LTE packet core (EPC for Evolved Packet Core), are generally designed in a centralized way, so that all traffic is tunneled through a single Packet Data Network Gateway (PGW) interfaced with a Packet Data Networks (PDN) through SGi link.

The PDN may be provided for instance by a CDN, comprising DAs (also known as delivery nodes) and Service Nodes (also known as control nodes), that are configured for managing, routing and monitoring components of the CDN.

In fact, LTE packet core is a centralized architecture. The LTE architecture does not allow CDN service to determine a near DA based only on UE IP address, since UE IP address has no topological meaning (i.e. are not interpretable in terms of location) within LTE networks. Moreover, LTE architecture does not allow placing DAs lower in LTE networks than on SGi interfaces, i.e. next to PGWs because of its centralized architecture.

This appears to be a major issue, since mobile networks face the same traffic problems as fixed/wired accesses networks, and it would be definitely useful to place DAs lower in LTE networks, in order to offload the EPC.

Consequently, it matters to allow CDN operators to place DAs at lower levels in their networks, in order to avoid central server bottlenecks issues, and make DAs reachable by the users.

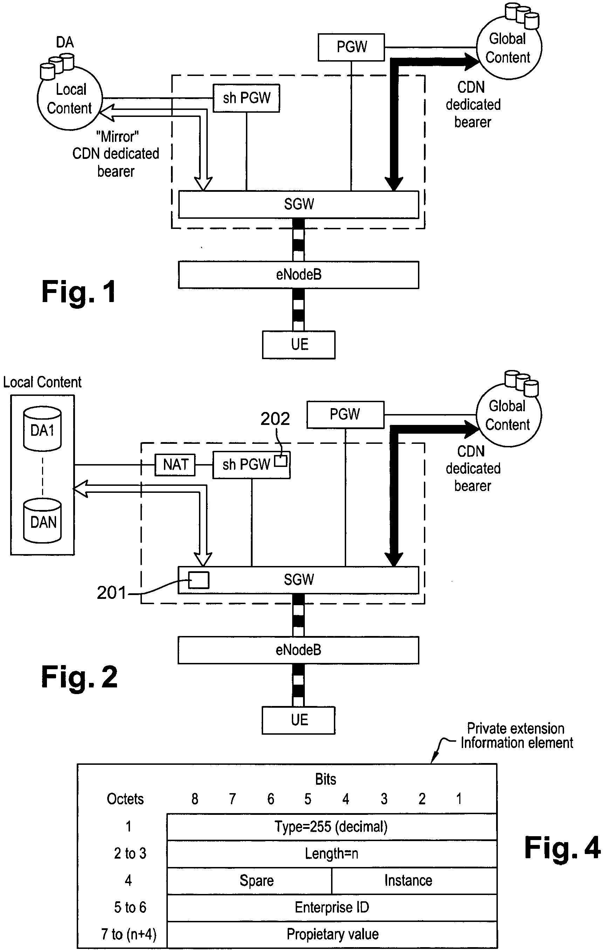

A solution is described in the European patent application EP13306183.8, filed on August 29th 2013, which is hereby incorporated by reference. This solution, illustrated on figure 1, relies on using a system comprising:
- a base station eNodeB providing a connection to an UE ;
- a central Packet Data Network Gateway PGW ;
- a Serving Gateway SGW interfaced between the base station eNodeB and the central PGW ;
- a shadow PGW, referenced as Sh PGW, interfaced between the SGW and the closest CDN DA to the base station eNodeB. The shadow PGW may be indifferently a separated module from the SGW or collocated near the SGW.

According to the solution, the SGW is configured for, upon reception of a bearer establishment request issued from the central PGW, known as "Create Bearer Request":
- determining whether the requested bearer is associated with the CDN, that is to say whether the requested bearer is a dedicated bearer for the CDN traffic ;
- in the event that the requested bearer is a CDN dedicated bearer:
   o establishing a CDN dedicated bearer with the central PGW ;
   o establishing a "mirror" CDN dedicated bearer with the shadow PGW with using information from the CDN dedicated bearer established with the central PGW. Said information comprise tunnel endpoint identifiers TEID, traffic flow template TFT, quality of service QoS class of identifier and guaranteed bit rate GBR used by the CDN dedicated bearer established with the central PGW.

Afterwards, the SGW routes:
- uplink data received from the base station eNodeB (also known as eNB):
   ▪ with using the "mirror" CDN dedicated bearer established with the shadow PGW, when the uplink data is identified as referring to CDN data ; then the shadow PGW forwards the CDN traffic to the DA ;
   ▪ with using a default bearer established with the central PGW otherwise ;
- downlink data received in response to uplink data, from the central or shadow PGW to the base station eNobeB.

Thus, the shadow PGW is configured for automatically and transparently routing (from central PGW point of view) a given CDN traffic to/from a nearest DA of the Local Content, that is to the nearest local DA, which avoids loading the EPC.

The described configurations are made by using the GPRS Tunneling Protocol (GTP).

Once the CDN dedicated bearer is established, all the traffic to said CDN is routed through this dedicated bearer to dedicated Delivery Appliance by the shadow PGW. Thus one gains a local Delivery Appliance, nearer than an appliance reached through the main Packet Data Gateway, but the local Appliance is unique for a CDN. This leads, for example, to bottlenecks for some QoS if the number of users increases.

### SUMMARY OF THE INVENTION

One object of the present invention is to provide a solution to the aforementioned drawbacks, and offers other advantages over the prior art.

One object of the present invention is to allow routing management in a Content Delivery Network without loading the EPC.

One object of the present invention is to be transparent for the existing architecture.

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

According to a first aspect, the invention relates to a method for managing routing in a Content Distribution Network in a Mobile Network, the Content Distribution Network comprising at least two Delivery Appliances accessible through a Shadow Packet Data Gateway, the method comprising the following steps:
- setup of a regular dedicated bearer, and of a mirror dedicated bearer, by using a least a Create Bearer Request, one of the parameters of the Create Bearer Request being an information related to a Delivery Appliance among one of the at least two deliveries appliance,
- setup of a Network Address Translation function, at the Shadow Packet Data Gateway level for the mirror dedicated bearer, to translate a regular Content Distribution Network address into a Delivery Appliance address, the Delivery Appliance address being computed during the setup of the dedicated bearers by using the information related to a Delivery Appliance.

According to another aspect of the invention the information related to a delivery appliance is transmitted by using the Private Extension format of the protocol used for the setup of the dedicated bearers.

According to another aspect of the invention the information related to a Delivery Appliance is a network address, the address to be translated being known by default configuration.

According to another aspect of the invention the information related to a Delivery Appliance is a set of at least one pair of network addresses, one first address of the pair being an address of one of the at least two deliveries appliance, the second address of the pair being the address to be translated.

The invention also relates to a computer program implemented on a processing unit of a computer, the program including code sections for performing instructions corresponding to the steps of a method according to any preceding claims.

### DESCRIPTION OF THE DRAWINGS

The objects, advantages and other features of various embodiments will become more apparent from the following disclosure and claims. The following non-restrictive description of preferred embodiments is given for the purpose of exemplification only with reference to the accompanying drawing in which
- Figure 1: a schematic diagram illustrating the routing of data traffic in the state of the art;
- Figure 2: a schematic diagram illustrating the routing of data traffic in the invention;
- Figure 3: an illustration of a dedicated CDN bearer establishment procedure between a UE and a PGW, then between a SGW and a shadow PGW, then between SGW and NAT according to various embodiments;
- Figure 4 : an illustration of Private Extension of a GTP message according to the 3GPP TS 29.274 specification

### DETAILLED DESCRIPTION OF ILLUSTRATIVE EMBODIMENTS

Figure 2 shows, between the shadow PGW and the Local Content a NAT (Network Address Translation) function for the handling of data traffic between the shadow PGW and the Local Content.

One reminds here that the Local Content is a network of delivery appliances. In the invention the Local Content comprises at least two delivery appliances for example DA1 and DA2. In a more general case Local Content comprise N, where N greater than two, delivery appliances DA1 to DAN.

The NAT function is configured according to steps of the invention.

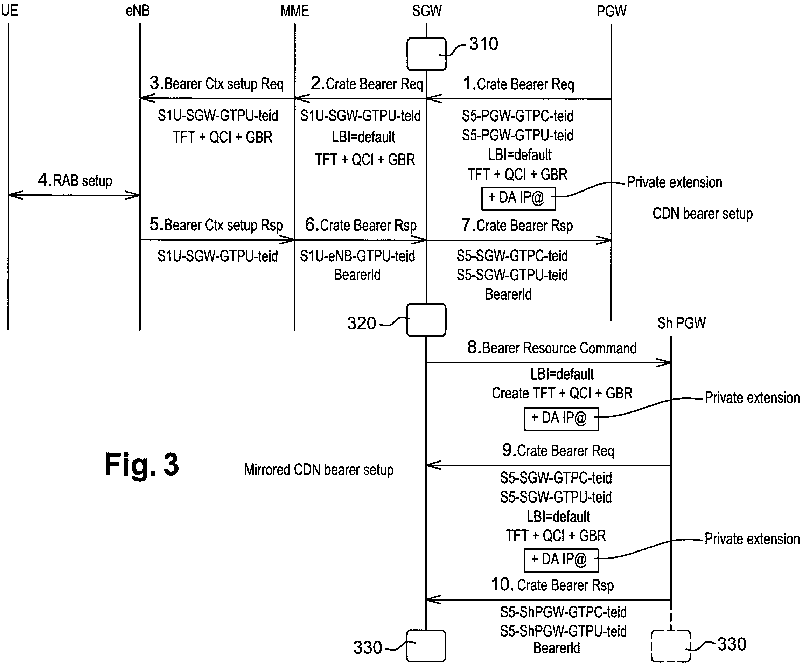

Figure 3 shows the steps, according to section 7.2.3 of the 3GPP TS 29.274 specification, of establishment of a dedicated bearer. Such a dedicated is here called a regular dedicated bearer as it follows said specification.

In particular figure 3 show the reception by SGW of a "1. Create Bearer Req", that is the reception of a first create bearer request in a step 310. Such a create bearer message is a message according to the GTP protocol.

As defined in the 3GPP TS 29.274 specification, the bearer creation request, as a GTP message, comprises several information elements, among those listed hereafter:
- Procedure Transaction Id (PTI)
- Linked Bearer Identity (LBI)
- Protocol Configuration Options (PCO), like QoS Class of Identifier (QCI), Guaranteed Bit Rate (GBR)
- Bearer Context, comprising among others a Traffic Flow Template (TFT)
- PGW-FQ-CSID
- SGW-FQ-CSID
- Change Reporting Action
- CSG Information Reporting Action
- Private Extension.

The whole dedicated bearer establishment procedure involves 7 messages known by at least 3GPP specification:
- 1. Create Bearer Req from PGW to SGW,
- 2. Create Bearer Req from SGW to Mobile Management Entity (MME),
- 3. Bearer Ctx Setup Rq from MME to eNB,
- 4. RAB Setup between eNB and UE,
- 5. Bearer Ctx Setup Rsp from eNB to MME,
- 6. Create Bearer Rsp from MME to SGW,
- 7. Create Bearer Rsp from SGW to PGW.

Those messages are illustrated here to allow better understanding on where invention acts in the specification. The steps of the invention are triggered by the reception of a Create Bearer Request by SGW leaving all the rest of the process and messages unchanged.

Figure 3 also shows that the mirrored dedicated bearer establishment procedures involve 3 messages:
- 8. Bearer Ressource Command from SGW to shadow PGW
- 9. Create Bearer Req from shadow PGW to SGW, and
- 10. Create Bearer Resp from shadow PGW to SGW.

The Private Extension information element is an element of a variable length, having the structure illustrated in figure 4. The last part of the Private Extension information element, starting from the seventh octet, is reserved to encode a proprietary value of configurable length. The invention use this proprietary value to carry an information related to a delivery appliance among the at least two deliveries appliance of the Local Content.

In one embodiment of the invention, the related information is a simple address, for example an IP address according to protocol IPV4 or IPV6. In this embodiment

In another embodiment of the invention, the related information is structured in fields, a first field being an instruction code, a second field being an IP address. In this embodiment the value of the instruction code field allows to specify how to handle the related information.

In another embodiment of the invention the related information is structured as to be a set of at least one pair of network addresses, one first address of the pair being an address of one of the at least two deliveries appliance, the second address of the pair being the address to be translated.

From step 310 of reception of a create bearer request the SGW proceeds with the establishment of the regular dedicated bearer and with a step 320 of establishment of a mirrored dedicated bearer. In step 320 of establishment of a mirrored dedicated bearer the SGW sends a Bearer Resource Command message to the shadow PGW. The parameters used of this message are the same as those received by the first create bearer request. In one embodiment those used parameters includes the private extension. In another embodiment the private extension is not included.

At this time the SGW or the shadow PGW, depending on the embodiment, executes a step 330 of setup of the NAT function. This setup is made according to private extension content.

If private extension's private value comprises just one IP address, the NAT function is configured to translate every IP packet from shadow PGW by translating:
- a predetermined IP address into the address carried by the private extension of the GTP message. The translation is operated on the destination field of the IP datagram. This predetermined IP address is stored at the SGW, in a memory 201, and/or shadow PGW level, in a memory 202, in a not represented configuration step; Or
- an address computed from Traffic Flow Template of the GTP message carrying the private extension. If the Traffic Flow Template corresponds to several address, several rules are set, all translating an IP address into the address carried by the private extension of the GTP message. The translation is operated on the destination field of the IP datagram.

This kind of NAT is also known as DNAT.

These two cases are default configuration cases: the address to be translated is computed from known parameter, TFT or a known address. Such a known address may be stored in a memory at the SGW level or shadow PGW level.

If private extension's private value comprises a set of pair of IP address, the NAT function is configured by setting as many translation rules as pair in the set. A rule is set to search the second address of the pair, in the destination field of the IP datagram, to replace it by the first address of the pair.

After step 330 of configuration of the NAT function the UE can communicate according to the invention. That is a routing is done by the UE according to the Traffic Flow Templates received during the configuration, then a routing is done by the SGW according to the TEID of the received packet and finally, according to the invention a routing is done by the NAT function used by the invention.

In action a scenario should be:
- the UE sends a first request for content to a Global CDN, this first request is routed to the PGW as non-relevant for the TFT of the dedicated bearer;
- the UE receive a response being a redirection to a specific IP address;
- the UE then send a second request for content to this specific IP address, this second request is routed to dedicated bearer because the specific address is relevant for the TFT of the dedicated bearer. Then the SGW routes this second query to she shadow PGW;
- then this second request is handled by the NAT function and routed to one of the delivery appliance of the Local Content.

One can see that with the invention it is possible to route traffic in the Local Content by setting appropriate redirection in the Global Content.

## Claims

1. Method for managing routing in a Content Distribution Network in a Mobile Network, the Content Distribution Network comprising at least two Delivery Appliances accessible through a Shadow Packet Data Gateway, the method comprising the following steps:
- setup (310 - 320) of a regular dedicated bearer, and of a mirror dedicated bearer, by using a least a Create Bearer Request, one of the parameters of the Create Bearer Request being an information related to a Delivery Appliance among one of the at least two deliveries appliance,
- setup (330) of a Network Address Translation function, at the Shadow Packet Data Gateway level for the mirror dedicated bearer, to translate a regular Content Distribution Network address into a Delivery Appliance address, the Delivery Appliance address being computed during the setup of the dedicated bearers by using the information related to a Delivery Appliance.

2. Method for managing routing according to claim 1, wherein the information related to a delivery appliance is transmitted by using the Private Extension format of the protocol used for the setup of the dedicated bearers.

3. Method for managing routing according to any of preceding claims, wherein the information related to a Delivery Appliance is a network address, the address to be translated being known by default configuration.

4. Method for managing routing according to any of preceding claims, wherein the information related to a Delivery Appliance is a set of at least one pair of network addresses, one first address of the pair being an address of one of the at least two deliveries appliance, the second address of the pair being the address to be translated.

5. Computer program implemented on a processing unit of a computer, the program including code sections for performing instructions corresponding to the steps of a method according to any preceding claims.
